(19) Europäisches Patentamt
European Patent Office
Office européen des brevets

(11) **EP 2 261 706 B1**

(12) **EUROPEAN PATENT SPECIFICATION**

(45) Date of publication and mention
of the grant of the patent:
**30.03.2016   Bulletin 2016/13**

(51) Int Cl.:
***G02B 6/036*** *(2006.01)*   ***G02B 6/02*** *(2006.01)*

(21) Application number: **10075023.1**

(22) Date of filing: **15.01.2010**

(54) **Single mode optical fibre**

Monomodale optische Faser

Fibre optique monomode

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.01.2009   FR 0900299**
                **23.02.2009   US 154538 P**

(43) Date of publication of application:
**15.12.2010   Bulletin 2010/50**

(73) Proprietor: **Draka Comteq B.V.**
**1083 HJ  Amsterdam (NL)**

(72) Inventors:
• **Richard, Simon**
**91140 Villebon sur Yvette (FR)**
• **De Montmorillon, Louis-Anne**
**78000 Versailles (FR)**
• **Sillard, Pierre**
**78150 Le Chesnay (FR)**
• **Bigot-Astruc, Marianne**
**91460 Marcoussis (FR)**
• **Molin, Denis**
**91210 Draveil (FR)**

(74) Representative: **Algemeen Octrooi- en Merkenbureau B.V.**
**P.O. Box 645**
**5600 AP Eindhoven (NL)**

(56) References cited:
EP-A1- 1 788 415      EP-A1- 1 936 411
US-A- 6 097 870       US-A1- 2006 045 448
US-B2- 6 636 677      US-B2- 6 901 197

• **HOGARI K ET AL: "Hole-assisted fiber design for small bending and splice losses", IEEE PHOTONICS TECHNOLOGY LETTERS, IEEE SERVICE CENTER, PISCATAWAY, NJ, US, vol. 15, no. 12, 1 December 2003 (2003-12-01), pages 1737-1739, XP011104304, ISSN: 1041-1135**

## Description

The present invention relates to the field of optical fibre transmissions, and more specifically, an optical fibre having substantially reduced bending losses.

For optical fibres, the index profile is generally classified according to the appearance of the graph of the function which associates the refractive index with the radius of the fibre. In standard fashion, the distance r to the centre of the fibre is shown on the x-axis, and on the y-axis, the difference between the refractive index and the refractive index of the fibre cladding. The outer cladding performing the function of optical cladding has a substantially constant refractive index; this optical cladding is generally composed of pure silica but can also contain one or more dopants. Thus the terms "step", "alpha" "trapezium" or "triangle" index profile are used to describe graphs having the shapes of a step, a graded index alpha trapezium or triangle respectively. These curves are generally representative of the theoretical or set profile of the fibre, whilst the manufacturing constraints of the fibre may result in a slightly different profile.

In standard fashion, an optical fibre is composed of an optical core having the function of transmitting and optionally amplifying an optical signal, and an optical cladding having the function of confining the optical signal within the optical core. To this end, the refractive indices of the optical core $n_1$ and the optical cladding $n_2$ are such that $n_1>n_2$. As is well known, the propagation of an optical signal in a single mode optical fibre can be broken down into a fundamental guided mode (called LP01) in the optical core and secondary guided modes over a certain distance in the core-cladding assembly.

In standard fashion, step-index fibres, also called SMF (single mode fibres) are used for optical fibre transmission systems. These fibres have a chromatic dispersion and a chromatic dispersion slope complying with specific telecommunications standards.

In response to the need for compatibility between optical systems from different manufacturers, the International Telecommunication Union (ITU) has defined a standard, reference ITU-T G.652, with which a standard optical transmission fibre, called SSMF (standard single mode fibre), must comply.

Among others, the G.652 standard recommends for a transmission fibre in the range of 8.6-9.5 $\mu$m [8.6; 9.5 $\mu$m] for the mode field diameter (MFD) at a wavelength of 1310 nm; a maximum of 1260 nm for the value of the cable cut-off wavelength; the range of 1300-1324 nm [1300; 1324 nm] for the value of the zero dispersion wavelength (ZDW); a maximum of 0.092 ps/nm$^2$.km for the value of the chromatic dispersion slope at the zero dispersion wavelength, or zero dispersion slope (ZDS). In standard fashion, the cable cut-off wavelength is measured as the wavelength at which the optical signal is no longer single mode after propagation over twenty-two metres of fibre, as defined by subcommittee 86A of the International Electrotechnical Commission in the standard IEC 60793-1-44.

Moreover, for applications having fibres intended for optical systems laid to private homes, called fibre to the home (FTTH) or fibre to the curb (FTTC), the reduction in bending losses is essential, in particular when the optical fibre is intended to be clipped or coiled in a miniaturised optical box. Standards have thus been defined to impose bending-loss limits on fibres intended for such applications. The G.657B standard reproduces the requirements of the G.652 standard and moreover imposes strict limits on bending losses:

- at a wavelength of 1550 nm, the bending losses must be less than 0.003 dB/turn for a radius of curvature of 15 mm, 0.1 dB/turn for a radius of curvature of 10 mm, and 0.5 dB/turn for a radius of curvature of 7.5 mm;
- at a wavelength of 1625 nm, the bending losses must be less than 0.01 dB/turn for a radius of curvature of 15 mm, 0.2 dB/turn for a radius of curvature of 10 mm, and 1 dB/tour for a radius of curvature of 7.5 mm.

For a given optical fibre, a value known as MAC value is also defined, as the ratio of the mode field diameter of the optical fibre at 1550 nm to the effective cut-off wavelength. In standard fashion, the effective cut-off wavelength $\lambda_C$ is measured as the wavelength at which the optical signal is no longer single mode after propagation over 2 metres of fibre, as defined by subcommittee 86A of the International Electrotechnical Commission in the standard IEC 60793-1-44. The MAC value constitutes a parameter for assessment of the performances of the optical fibre, in particular for finding a compromise between the mode field diameter, the effective cut-off wavelength and the bending losses.

Reference can be made to the documents EP-A-1,845,399 and EP-A-1,785,754 which illustrate the Applicant's experimental results and establish a relationship between the MAC at the wavelength of 1550 nm and the bending losses at the wavelength of 1625 nm with a radius of curvature of 15 mm in a standard SSMF step-index fibre. These documents establish in particular that the MAC value has an effect on the bending losses of the optical fibre and that these bending losses can be reduced by reducing the MAC. However, reducing the MAC can result in exceeding the limits of the G.652 standard.

Reducing the bending losses while retaining certain optical transmission parameters, in particular regarding mode field diameter and cut-off wavelength, constitutes a major challenge for FTTH or FTTC applications.

Fibre profiles having limited bending losses but just complying with the criteria of the G.652 standard, in particular regarding mode field diameter and chromatic dispersion, are known from US-A-7,164,835 and US-A-2007/0147756.

Holey fibres are optical fibres having a regular arrangement of air holes running along their length to act as at least a part of a cladding.

Moreover, holey-fibre technology makes it possible to achieve good performances with regards to bending losses. This is why a certain number of optical fibres have been proposed implementing this technology.

For example, an optical fibre comprising a central core and an optical cladding is known from US-B-6,901,197. A plurality of holes is formed in the optical cladding. These holes are arranged to form concentric hexagons.

US-A-2006/24009 describes a single mode fibre comprising a central core and an optical cladding. The optical cladding includes a plurality of cylindrical air holes which form a network. The air holes are arranged periodically such that the centre-to-centre distance between two adjacent air holes is at least equal to 1.5 times the wavelength of the light propagating in the optical fibre.

The document US-B-6,636,677 describes an optical fibre comprising a central core and an optical cladding in which a plurality of air holes arranged in concentric circles is formed.

Fibres having cylindrical air holes arranged in a single ring are also known.

Thus, US-A-5,907,652 discloses a multimode fibre comprising a central core, a multimode intermediate optical cladding, a first and a second external optical cladding, and a polymer coating. According to this document, air holes are formed in the first outer cladding, the air holes occupying a volume greater than 75% of the volume of the first outer optical cladding.

Moreover, US-A-2006/45448 describes an optical fibre comprising a central core and an optical cladding in which a plurality of cylindrical air holes arranged in a ring is formed.

Another optical fibre comprising a central core and an optical cladding having cylindrical air holes formed in the cladding and distributed in a ring is described in the article "Hole-assisted fiber design for small bending and splice losses", from IEEE photonics technology letters, vol. 15, No. 12, December 2003. The diameter of the holes is equal to the diameter of the central core.

The article "High performance optical fibers for next generation transmission systems", from Hitachi Cable Review, No. 22, August 2003, also describes an optical fibre comprising a central core and an optical cladding having six air holes. However, this article does not give any details concerning the dimensions of the different elements of the fibre.

Similarly, the article "Field installable connector optimized for holey fiber", by Y. Kato, K. Suzuki and K. Ohsono from the proceedings of the Optical fiber communications conference, OFC 2007, communication NthA2, also describes an optical fibre comprising a central core and an optical cladding comprising six air holes. However, this article does not give details concerning the dimensions of the different elements of the fibre.

Finally, the article "A novel fabrication method of versatile holey fibers with low bending loss and their optical characteristics", by G.H. Kim, Y.-G. Han, H.S. Cho, S.H. Kim, S.B. Lee, K.S. Lee, C.H. Jeong, C.H. Oh, H.J. Kang, from the proceedings of the Optical fiber communications conference, OFC 2006, communication OWI2, describes an optical fibre comprising a central core and an optical cladding in which six air holes are arranged, positioned in a ring. The diameter of the holes is greater than the diameter of the central core.

There is still a need for an optical fibre having a good resistance to bending losses, whilst having a relatively high MAC value.

To this end, the invention proposes a holey fibre optimised to improve bending losses while retaining a high MAC value. The optimization of fibre profiles is very complicating, involving a number of independent parameters (profile parameters impacting the bending loss also determine the WO2 cutoff wavelength etc.). Optimization is carried out in a 4-dimensional space ($r_1$, $r_h$, $\Delta n$ and $\wedge$) and hence it is a true invention process.

The invention proposes more particularly an optical fibre according to claim 1.

Preferably, the optical fibre according to the invention has one or more of the following characteristics, taken alone or in combination:

- the at least five holes are circumferentially equidistantly distributed;
- the optical fibre has a MAC value of at least 6.5, the MAC value being defined as the ratio of the mode field diameter of the fibre at 1550 hm to the effective cut-off wavelength of the fibre;
- for a wavelength of 1550 nm, the fibre has bending losses of less than:

    - $5.0 \cdot 10^{-1}$ dB/turn for a radius of curvature Rc=7.5 mm; and
    - $1.0 \cdot 10^{-1}$ dB/turn for a radius of curvature Rc=10 mm;

- the optical fibre having a MAC value less than 8.5;
- for a wavelength of 1625 nm, the fibre has bending losses of less than:

    - 1.0 dB/turn for a radius of curvature Rc=7.5 mm; and
    - 0.2 dB/turn for a radius of curvature Rc=10 mm;

- the optical fibre having a MAC value less than 8.5;
- the fibre has a MAC value less than 8.4 and, for a wavelength of 1550 nm, bending losses of less than:

  - $6 \cdot 10^{-1}$ dB/turn for a radius of curvature Rc=5 mm, and
  - $8 \cdot 10^{-3}$ dB/turn for a radius of curvature Rc=15 mm;

- the fibre has a MAC value less than 8 and, for a wavelength of 1550 nm, bending losses of less than:

  - $3.0 \cdot 10^{-1}$ dB/turn for a radius of curvature Rc=5 mm, and
  - $4.0 \cdot 10^{-3}$ dB/turn for a radius of curvature Rc=15 mm;

- the fibre has a MAC value less than 7.5 and, for a wavelength of 1550 nm, bending losses of less than:

  - $2.0 \cdot 10^{-1}$ dB/turn for a radius of curvature Rc=of 5 mm, and
  - $7.0 \cdot 10^{-4}$ dB/turn for a radius of curvature Rc=15 mm;

- the fibre has a MAC value less than 7 and, for a wavelength of 1550 nm, bending losses of less than:

  - $1.0 \cdot 10^{-1}$ dB/turn for a radius of curvature Rc=5 mm, and
  - $1.0 \cdot 10^{-5}$ dB/turn for a radius of curvature Rc=15 mm;

- the value of the zero dispersion wavelength $\lambda_0$ of the fibre is comprised between $1300 < \lambda_0 < 1324$ nm;
- the value of the chromatic dispersion slope at the zero dispersion wavelength of the fibre is less than $9.2 \cdot 10^{-2}$ ps/nm$^2$/km;
- the fibre has a cable cut-off wavelength of less than 1260 nm;
- the fibre has an effective cut-off wavelength of less than 1260 nm;
- the fibre comprises a single ring of holes;
- The fibre has a mode field diameter 2xW02 at the wavelength of 1310 nm comprised between 8.6 and 9.5 $\mu$m.

Other characteristics and advantages of the invention will become apparent on reading the following description of the embodiments of the invention, given by way of example and with reference to the attached drawing which shows a diagrammatic representation of a cross section view of a fibre according to an embodiment of the invention.

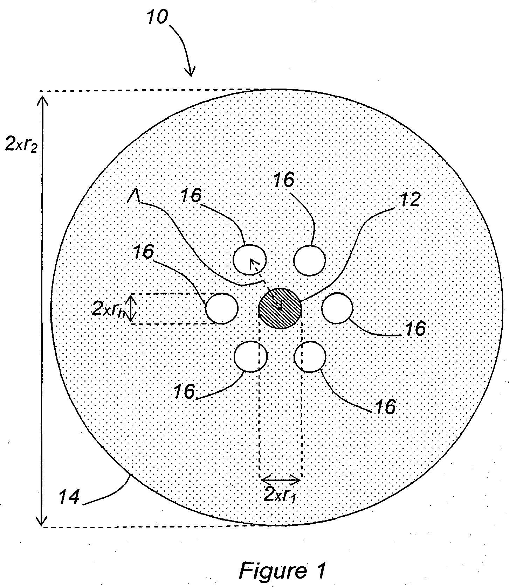

As illustrated in Figure 1, the fibre 10 of the invention has a central core 12 and an optical cladding 14. Typically, the central core 12 is obtained by CVD-type deposition in a silica tube forming the preform and the optical cladding 14 is constituted by the tube, the tube is generally refilled with natural or doped silica. The central core 12 can also be obtained by any other deposition technique (VAD or OVD). The optical fibre 10 also comprises holes 16 formed in the optical cladding 14. These holes 16 can be obtained by drilling in the preform once the deposition of the central core 12 and the overcladding have been carried out, or by any other technique.

In a manner known *per se,* the optical fibre 10 can be obtained by drawing the preform.

The holey fibre can also be obtained by drawing a preform itself obtained according to the method known as "sol-gel". According to this method, the preform is produced by moulding.

According to another variant, the preform to be drawn is obtained according to a process called "stack and draw". According to this process, the preform is produced by assembling hollow tubes in order to form the holes, and solid rods in order to form the central core and the cladding.

In Figure 1, six holes 16 are made in the optical cladding 14. However, the optical fibre 10 according to the invention comprises at least five holes and can comprise more than six holes.

Remarkably, the holes 16 of the optical fibre 10 according to the invention are arranged in a single ring around the central coren 12, in order to have an approximately constant angular separation between two successive holes 16, measured from the centre of the central core 12. In other words, the holes 16 of the optical fibre 10 are circumferentially equidistantly distributed around the central core 12. Thus, the holes 16 are distributed substantially equidistantly from the central core 12, and the distance between two adjacent holes 16 is substantially constant.

In fact, it has been observed that optical fibres 10 comprising a structure with several rings of air hole 16 around the central core 12 have greater bending losses, in particular for radii of curvature of less than 15 mm, than optical fibres 10 where the holes 16 are arranged in a single ring. Moreover, the optical fibres 10 with several concentric rings of air holes 16 are more complex to manufacture than optical fibres 10 comprising holes 16 distributed over a single ring around the central core 12.

The optical fibre 10 according to the invention comprises a central core 12 having a refractive index $n_1$ and an optical cladding 14 having a refractive index $n_2$, the index $n_1$ being greater than the index $n_2$.

The width of the central core 12 is defined by its radius $r_1$, the width of the optical cladding 14 by its outer radius $r_2$, and the width of the holes 16 by their radius $r_h$.

According to the invention, the central core 12 has a radius $r_1$ comprised between 3.2 et 4.5 $\mu$m; i.e. substantially equivalent to that of a standard single mode fibre.

The radius $r_2$ of the optical cladding 14 is preferably comprised between approximately 80 and approximately 125 $\mu$m. A radius $r_2$ of 80 $\mu$m makes it possible in particular to obtain an optical fibre 10 having an improved mechanical strength.

Moreover, the central core 12 and the optical cladding 14 of the optical fibre 10 have respectively a refractive index $n_1$, $n_2$ such that $n_2 < n_1$ and:

$$0.31\% < \Delta n = \frac{n_1 - n_2}{n_2} < 0.55\%.$$

The diameter of the central core 12 as well as its index difference relative to the optical cladding 14 make it possible to ensure conditions of propagation of the optical signal compatible with the G.652 standard, in particular as regards chromatic dispersion and mode field diameter.

Moreover, the optical cladding 14 comprises at least five, preferably 6 holes 16, of radius $r_h$ circumferentially equidistantly distributed at a distance $\wedge$ from the central core 12. These holes 16 form negative step indices in the optical cladding 14, and thus contribute to an improvement in the bending loss characteristics of the optical fibre 10 according to the invention.

The holes 16 are in the form of continuous channels. In this case, the holes extend longitudinally along the axis of the optical fibre 10. However, the holes 16 can also extend helicoidally along the optical fibre 10. In other words, the holes 16 can also be twisted or stranded.

Preferably, the number of holes 16 is limited to 8 holes.

The holes 16 can be filled with air, in particular dry air. In fact, the humidity of the air can cause an increase in the dissipation of the optical fibre 10. The holes 16 can however also be filled with an inert gas such as argon, helium or nitrogen.

According to the invention, the distance $\wedge$ between the centre of the holes 16 and the centre of the central core 12 is comprised between 9 and 17 $\mu$m. Preferably, this distance $\wedge$ is comprised between 11 and 15 $\mu$m and, yet more preferably, equal to 13 $\mu$m. In fact, if the holes 16 are too close to the central core 12, they allow the propagation of higher-order modes in the optical fibre 10, which results in an increase in the cut-off wavelength. If the holes 16 are too far from the central core 12, it is not possible to guarantee bending losses within the limits imposed by the G.657 standard.

Moreover, according to the invention, the radius of the holes $r_h$ and the radius of the central core $r_1$ satisfy the inequality $0.5 \times r_1 \le r_h \le 0.9 \times r_1$, preferably $0.6 \times r_1 \le r_h \le 0.9 \times r_1$ or even $0.7 \times r_1 \le r_h \le 0.9 \times r_1$. Even more preferably, the radius of the holes is equal to $0.75 \times r_1$. If $r_h < r_1.0.5$ the bending loss specifications regarding the G.657B standard are not met (see also Table II, column Ebis).

If the radius of the holes 16 of the optical fibre 10 is too small, it is not possible to guarantee bending losses within the limits imposed by the G.657 standard. If the radius ($r_h$) of the holes 16 of the optical fibre 10 is too large, they allow the propagation of higher-order modes in the optical fibre 10, leading to an increase in the cut-off wavelength.

It has been noted that these values of parameters for a holey fibre make it possible to obtain an optical fibre 10 having both low bending losses and a relatively high MAC value.

Thus, preferably, the optical fibre 10 has a MAC value greater than 6.5.

The optical fibre 10 according to the invention can also have a MAC value less than 8.5 and, for a wavelength of 1550 nm, bending losses of less than 0.5 dB/turn for a radius of curvature Rc=7.5 mm, and of less than 0.1 dB/turn for a radius of curvature Rc=10 mm.

For example, the optical fibre 10 according to the invention can have a MAC value less than 8.4 and, for a wavelength of 1550 nm, bending losses of less than $6 \cdot 10^{-1}$ dB/turn for a radius of curvature of 5 mm, and of less than $8.10^{-3}$ dB/turn for a radius of curvature of 15 mm. According to another example, the optical fibre 10 according to the invention can have a MAC value of less than 8 and, for a wavelength of 1550 nm, bending losses of less than $3 \cdot 10^{-1}$ dB/turn for a radius of curvature of 5 mm, and of less than $4 \cdot 10^{-3}$ dB/turn for a radius of curvature of 15 mm.

According to another example, the optical fibre 10 according to the invention can have a MAC value of less than 7.7 and, for a wavelength of 1550 nm, bending losses of less than $3 \cdot 10^{-1}$ dB/turn for a radius of curvature of 5 mm, and of less than $7 \cdot 10^{-4}$ dB/turn for a radius of curvature of 15 mm.

According to another example, the optical fibre 10 according to the invention can have a MAC value of less than 7.5 and, for a wavelength of 1550 nm, bending losses of less than $2 \cdot 10^{-1}$ dB/turn for a radius of curvature of 5 mm, and of less than $5 \cdot 10^{-4}$ dB/turn for a radius of curvature of 15 mm. According to another example, the optical fibre according to the invention can have a MAC value of less than 7 and, for a wavelength of 1550 nm, bending losses of less than $8 \cdot 10^{-2}$ dB/turn for a radius of curvature of 5 mm, and of less than $1.5 \cdot 10^{-3}$ dB/turn for a radius of curvature of 15 mm.

Moreover, the optical fibre 10 according to the invention can have a zero dispersion wavelength value $\lambda_0$ which is comprised between $1300 < \lambda_0 < 1324$ nm. The optical fibre 10 according to the invention can also have a chromatic dispersion slope value at the zero dispersion wavelength of less than 0.092 ps/nm$^2$.km. Thus, the optical fibre 10 according to the invention can comply fully with the G.652 standard as regards chromatic dispersion.

Moreover, the optical fibre 10 according to the invention can have:

- a cable cut-off wavelength of less than 1260 nm, and
- a mode field diameter $2 \times W02$ at 1310 nm comprised between 8.6 and 9.5 $\mu$m.

The optical fibre 10 according to the invention therefore also complies with the G.652 standard in terms of cut-off wavelength and mode field diameter. Splicing with other existing G.652 standard compliant fibres can be envisaged with a minimum losses.

EXAMPLES

The tables below show examples of optical fibres.

The first line of Tables I to IV gives a reference to each example, from A to N. The second line defines the radius ($r_1$) of the central core. The third line indicates the refractive index $\Delta n$ of the central core in the form of a relationship defined as follows:

$$\Delta n = \frac{n_1 - n_2}{n_2},$$

where $n_1$ is the refractive index of the central core and $n_2$ is the refractive index of the optical cladding.

The refractive index of the central core is therefore given as a percentage in the tables below.

The next four lines indicate respectively:

- the number of holes produced in the optical cladding,
- their radius ($r_1$),
- the relationship between the radius of the holes and the radius of the central core ($r_h/r_1$), and
- the distance $\wedge$ between the holes and the central core, a distance which is measured from centre to centre.

The next two lines indicate the field mode field diameter $2 \times W02$ respectively at a wavelength of 1310 nm and 1550 nm. This mode field diameter $2 \times W02$ is defined according to the Petermann II equation.

The next two lines indicate respectively the fibre cut-off wavelength $\lambda_c$ and the MAC defined as the relationship $2 \times W02/\lambda_c$.

The next four lines give the bending losses BL at the wavelength of 1550 nm for, respectively, radii of curvature Rc of 15 mm, 10 mm, 7.5 mm and 5 mm, the values for the bending losses being expressed in dB per turn.

The next four lines give the bending losses BL at the wavelength of 1625 nm for, respectively, radii of curvature Rc of 15 mm, 10 mm, 7.5 mm and 5 mm, the values for the bending losses being expressed in dB per turn.

The fibres of Table I comprise six holes with a radius of 3 $\mu$m circumferentially equidistantly distributed at a distance $\wedge$ equal to 13 $\mu$m from the centre of the central core.

TABLE I

|  | A | B | C | D |
|---|---|---|---|---|
| $r_1$ ($\mu$m) | 4.4 | 4 | 3.5 | 3.2 |
| $\Delta n$ (%) | 0.31 | 0.36 | 0.47 | 0.55 |
| Number of holes | 6 | | | |
| $r_h$ ($\mu$m) | 3 | | | |
| ($r_h/r_1$) | 0.68 | 0.75 | 0.86 | 0.94 |

(continued)

|  |  | A | B | C | D |
|---|---|---|---|---|---|
| $\Lambda$ ($\mu$m) |  | 13 | | | |
| 2 × W02 @ 1310 nm ($\mu$m) |  | 9.6 | 8.8 | 7.8 | 7.2 |
| 2 × W02 @ 1550 nm ($\mu$m) |  | 10.5 | 9.8 | 8.8 | 8.1 |
| $\lambda_c$ |  | 1252 | 1254 | 1255 | 1251 |
| MAC |  | 8.4 | 7.8 | 7 | 6.5 |
| BL @ 1550 nm (dB/turn) | Rc=15 mm | $7.2\times10^{-3}$ | $8.1\times10^{-4}$ | $1.0\times10^{-5}$ | $1.1\times10^{-7}$ |
|  | Rc=10 mm | $5.6\times10^{-2}$ | $1.5\times10^{-2}$ | $1.1\times10^{-3}$ | $1.1\times10^{-4}$ |
|  | Rc=7.5 mm | $1.6\times10^{-1}$ | $6.2\times10^{-2}$ | $8.5\times10^{-3}$ | $1.8\times10^{-3}$ |
|  | Rc=5 mm | $5.4\times10^{-1}$ | $3.3\times10^{-1}$ | $7.0\times10^{-2}$ | $2.0\times10^{-2}$ |
| BL @1625 nm (dB/turn) | Rc= 15 mm | $2.0\times10^{-2}$ | $3.4\times10^{-3}$ | $9.8\times10^{-5}$ | $4.2\times10^{-6}$ |
|  | Rc=10 mm | $9.8\times10^{-2}$ | $3.3\times10^{-2}$ | $4.1\times10^{-3}$ | $6.1\times10^{-4}$ |
|  | Rc=7.5 mm | $2.6\times10^{-1}$ | $1.0\times10^{-1}$ | $2.1\times10^{-2}$ | $5.9\times10^{-3}$ |
|  | Rc=5 mm | $9.3\times10^{-1}$ | $4.6\times10^{-1}$ | $1.1\times10^{-1}$ | $5.0\times10^{-2}$ |

It is noted that the examples of Table I differ in dimension of the central core of the optical fibre, which has a radius $r_1$ comprised between 3.2 $\mu$m and 4.4 $\mu$m, in variation of the difference in index $\Delta$n between the core and the cladding, comprised between 0.31 and 0.55%.

The relationship between the radius of the holes and the radius of the central core varies between 0.68 and 0.94.

It is noted that only the fibre B complies with the G.652 standard as regards the mode field diameter.

The fibres A to D have an effective cut-off wavelength comprised between 1251 and 1255. Thus, all these fibres have a fibre cut-off wavelength which ensures a cable cut-off wavelength $\lambda_c$<1260 nm in compliance with the G.652 standard.

The MAC value of these fibres is comprised between 6.5 and 8.4.

The fibres of Examples A to D all have bending losses within the limits of the G.657B standard, in particular they all have bending losses at the wavelength of 1550 nm, less than 0.5 dB/turn, for a radius of curvature of 7.5 mm, and less than 0.1 dB/turn, for a radius of curvature of 10 mm.

In particular, the fibres of Examples C and D have bending losses ten times less than the bending losses required by the G.657B standard for the two wavelengths 1550 nm and 1625 nm.

Only fibre A has bending losses, for a radius of curvature of 15 mm, slightly above the values set by the G.657B standard. It should be noted that Example D does not form part of the invention.

Table II below has optical fibres which all have a central core with a 4 $\mu$m radius. The difference in the index between the central core and the optical cladding is equal to 0.36% in all these fibres. Finally, all the fibres of Table II have six holes circumferentially equidistantly distributed at a distance of 13 $\mu$m from the central core, measured from centre to centre.

TABLE II

|  | E | Ebis | F | B | G |
|---|---|---|---|---|---|
| $r_1$ ($\mu$m) | 4 | | | | |
| $\Delta$n (%) | 0.36 | | | | |
| Number of holes | 6 | | | | |
| $r_h$ ($\mu$m) | 1 | 1.6 | 2 | 3 | 4 |
| ($r_h/r_1$) | 0.25 | 0.4 | 0.5 | 0.75 | 1 |
| $\Lambda$ ($\mu$m) | 13 | | | | |
| 2 × W02 @ 1310 nm ($\mu$m) | 8.9 | 8.9 | 8.9 | 8.8 | 8.7 |
| 2x W02 @ 1550 nm ($\mu$m) | 10.0 | 10.0 | 10.0 | 9.8 | 9.6 |

(continued)

|  | | E | Ebis | F | B | G |
|---|---|---|---|---|---|---|
| $\lambda$c (nm) | | 1205 | 12.1 | 1225 | 1254 | 1483 |
| MAC | | 8.3 | 8.3 | 8.1 | 7.8 | 6.4 |
| BL @1550 nm (dB/turn) | Rc=15 mm | $1.1\times10^{-2}$ | $7.7\times10^{-3}$ | $3.7\times10^{-3}$ | $8.1\times10^{-4}$ | $7.0\times10^{-5}$ |
| | Rc=10 mm | $2.7\times10^{-1}$ | $1.6\times10^{-1}$ | $7.9\times10^{-2}$ | $1.5\times10^{-2}$ | $1.0\times10^{-3}$ |
| | Rc=7.5 mm | 1.29 | $5.9\times10^{-1}$ | $3.5\times10^{-1}$ | $6.2\times10^{-2}$ | $4.1\times10^{-3}$ |
| | Rc=5 mm | 6.5 | 2.6 | 1.8 | $3.3\times10^{-1}$ | $2.0\times10^{-2}$ |
| BL @1625 nm (dB/turn) | Rc=15 mm | $5.0\times10^{-2}$ | $3.2\times10^{-2}$ | $1.6\times10^{-2}$ | $3.4\times10^{-3}$ | $2.8\times10^{-4}$ |
| | Rc=10 mm | $6.7\times10^{-1}$ | $3.7\times10^{-1}$ | $1.9\times10^{-1}$ | $3.3\times10^{-2}$ | $2.2\times10^{-3}$ |
| | Rc=7.5 mm | 2.2 | 1.0 | $6.0\times10^{-1}$ | $1.0\times10^{-1}$ | $6.6\times10^{-3}$ |
| | Rc=5 mm | 10.2 | 3.2 | 2.8 | $4.6\times10^{-1}$ | $2.7\times10^{-2}$ |

The examples of Table II are distinguished from each other by the radius of the holes which are produced in each of Examples B, E, Ebis, F and G. It should be noted that Examples E, Ebis and G do not form part of the invention.

In fact, the radius of the holes, of fibre E is too small; therefore fibre E has relatively high bending losses, clearly above the values required by the G.657B standard.

The radius of the holes of fibre G is too large, equal to that of the central core. Such a diameter, in combination with 6 holes, results in a very high fibre cut-off wavelength, making it impossible to remain within the limits of the G.652 standard ($\lambda$cc<1260 nm). Fibre G also has a relatively low MAC value, of less than 6.4.

For the fibres B and F of Table II, it is noted that the values of the mode field diameter at 1310 nm comply with the G.652 standard. Similarly, fibres B and F have a fibre cut-off wavelength which ensures a cable cut-off wavelength in compliance with the G.652 standard.

The MAC value of these fibres is comprised between 7.8 and 8.1, i.e. high values. Notwithstanding these high MAC values, fibres B and F have bending losses substantially less than the limits of the G.657B standard; in particular, at the wavelength of 1550 nm, they have bending losses less than 0.5 dB/turn, for a radius of curvature of 7.5 mm, and less than 0.1 dB/turn, for a radius of curvature of 10 mm. However, fibre F has bending losses slightly greater than the values of the G.657 standard for a radius of curvature of 15 mm.

Tables IIIa and IIIb below show optical fibres all having a central core with a radius of 4 $\mu$m. The difference in index between the central core and the optical cladding is equal to 0.36% in all these fibres. Finally, all the fibres in Tables IIIa and IIIb have six holes circumferentially equidistantly distributed.

TABLE IIIa

|  | H | I | B |
|---|---|---|---|
| $r_1$ ($\mu$m) | 4 | | |
| $\Delta$n (%) | 0.36 | | |
| Number of holes | 6 | | |
| $r_h$ ($\mu$m) | 3 | | |
| $(r_h/r_1)$ | 0.75 | | |
| A ($\mu$m) | 9 | 11 | 13 |
| 2 $\times$ W02 @1310 nm ($\mu$m) | 7.6 | 8.6 | 8.8 |
| 2 $\times$ W02 @ 1550 nm ($\mu$m) | 7.8 | 9.2 | 9.8 |
| $\lambda$c (nm) | 1474 | 1274 | 1254 |
| MAC | 5.3 | 7.2 | 7.8 |

(continued)

|  |  | H | I | B |
|---|---|---|---|---|
| BL @1550 nm (dB/turn) | Rc=15 mm | $3.5 \times 10^{-4}$ | $4.8 \times 10^{-4}$ | $8.1 \times 10^{-4}$ |
|  | Rc=10 mm | $1.8 \times 10^{-3}$ | $6.4 \times 10^{-3}$ | $1.5 \times 10^{-2}$ |
|  | Rc=7.5 mm | $3.0 \times 10^{-3}$ | $2.3 \times 10^{-2}$ | $6.2 \times 10^{-2}$ |
|  | Rc=5 mm | $6.6 \times 10^{-3}$ | $6.6 \times 10^{-2}$ | $3.3 \times 10^{-1}$ |
| BL @ 1625 nm (dB/turn) | Rc=15 mm | $1.4 \times 10^{-3}$ | $2.2 \times 10^{-3}$ | $3.4 \times 10^{-3}$ |
|  | Rc=10 mm | $3.9 \times 10^{-3}$ | $1.4 \times 10^{-2}$ | $3.3 \times 10^{-2}$ |
|  | Rc=7.5 mm | $5.3 \times 10^{-3}$ | $3.9 \times 10^{-2}$ | $1.0 \times 10^{-1}$ |
|  | Rc=5 mm | $8.0 \times 10^{-3}$ | $1.2 \times 10^{-1}$ | $4.6 \times 10^{-1}$ |

TABLE IIIb

|  |  | B | J | K | L |
|---|---|---|---|---|---|
| $r_1$ ($\mu$m) |  | 4 | | | |
| $\Delta n$ (%) |  | 0.36 | | | |
| Number of holes |  | 6 | | | |
| $r_h$ ($\mu$m) |  | 3 | | | |
| ($r_h/r_1$) |  | 0.75 | | | |
| $\Lambda$ ($\mu$m) |  | 13 | 15 | 17 | 19 |
| $2 \times W02$ @ 1310 nm ($\mu$m) |  | 8.8 | 8.9 | 8.9 | 8.9 |
| $2 \times W02$ @ 1550 nm ($\mu$m) |  | 9.8 | 10.1 | 10.1 | 10.2 |
| $\lambda c$ (nm) |  | 1254 | 1244 | 1245 | 1247 |
| MAC |  | 7.8 | 8.1 | 8.1 | 8.2 |
| BL @1 550 nm (dB/turn) | Rc=15 mm | $8.1 \times 10^{-4}$ | $1.9 \times 10^{-3}$ | $2.9 \times 10^{-3}$ | $3.8 \times 10^{-3}$ |
|  | Rc=10 mm | $1.5 \times 10^{-2}$ | $3.2 \times 10^{-2}$ | $5.4 \times 10^{-2}$ | $8.5 \times 10^{-2}$ |
|  | Rc=7.5 mm | $6.2 \times 10^{-2}$ | $1.6 \times 10^{-1}$ | $3.2 \times 10^{-1}$ | $6.4 \times 10^{-1}$ |
|  | Rc=5 mm | $3.3 \times 10^{-1}$ | 1.2 | 3.9 | 13 |
| BL @1625 nm (dB/turn) | Rc=15 mm | $3.4 \times 10^{-3}$ | $7.4 \times 10^{-3}$ | $1.1 \times 10^{-2}$ | $1.5 \times 10^{-2}$ |
|  | Rc=10 mm | $3.3 \times 10^{-3}$ | $7.4 \times 10^{-2}$ | $1.3 \times 10^{-1}$ | $2.1 \times 10^{-1}$ |
|  | Rc=7.5 mm | $1.0 \times 10^{-1}$ | $2.7 \times 10^{-1}$ | $5.7 \times 10^{-1}$ | 1.2 |
|  | Rc=5 mm | $4.6 \times 10^{-1}$ | 1.7 | 5.0 | 17.0 |

Tables IIIa and IIIb show the impact of the distance between the centre of the core and the centre of the holes, these distances being comprised between 9 and 19 $\mu$m in these tables. It should be noted however, that Examples H and L do not form part of the invention; the fibre of Example H has holes too close to the central core and the fibre of Example L has holes too far from the central core.

Fibre H thus has a fibre cut-off wavelength of 1474 nm which implies a cable cut-off wavelength clearly greater than the limit value set by the G.652 standard. Fibre H furthermore has a relatively low MAC value, equal to 5.3.

It is noted that the mode field diameter values at 1310 nm of the examples of Tables IIIa and IIIb for the fibres according to the invention are comprised between 8.6 and 8.9 $\mu$m. These values therefore comply with the G.652 standard.

All the fibres of Tables IIIa and IIIb, namely B, I, J, K, have a fibre cut-off wavelength which ensures a cable cut-off wavelength less than 1260 nm.

Table IIIa moreover shows that the bending losses of fibre I are clearly less than the values set by the G.657B standard. In particular, for radii of curvature of 10 or 15 mm, these losses are at least ten times less than the limit values of the G.657B standard.

Fibre J also has bending losses less than the limit values set by the G.657B standard for the two wavelength values and for the different radii of curvature of the fibre.

Fibre K has bending losses generally less than the values set by the G.657B standard. However, at a wavelength of 1625 nm and for a radius of curvature of 15 mm, fibre K has bending losses equal to $1.1 \times 10^{-2}$ dB/turn, i.e. slightly greater than the limit value set by the G.657B standard.

Finally, the fibre L, which does not form part of the invention, has bending losses generally greater than the limit values set by the G.657B standard.

In any case, the fibres I, B, J and K all have bending losses at the wavelength of 1550 nm which are less than 0.5 dB/turn, for a radius of curvature of 7.5 mm, and less than 0.1 dB/turn, for a radius of curvature of 10 mm.

Table IV below shows optical fibres all having a central core radius of 4 $\mu$m. The difference in the index between the central core and the optical cladding is equal to 0.36% in all these fibres. Finally, all the fibres of Table IV have holes equidistantly distributed circumferentially at a distance of 13 $\mu$m from the central core, measured from centre to centre.

TABLE IV

| | | M | B | N |
|---|---|---|---|---|
| $r_1$ ($\mu$m) | | 4 | | |
| $\Delta n$ (%) | | 0.36 | | |
| Number of holes | | 5 | 6 | 8 |
| $r_h$ ($\mu$m) | | 4 | 3 | 2 |
| ($r_h/r_1$) | | 1 | 0.75 | 0.5 |
| $\Lambda$ ($\mu$m) | | 13 | | |
| $2 \times W02$ @1310 nm ($\mu$m) | | 8.8 | 8.8 | 9.0 |
| $2 \times W02$ @1550 nm ($\mu$m) | | 9.7 | 9.8 | 10.0 |
| $\lambda c$ (nm) | | 1262 | 1254 | 1267 |
| MAC | | 7.7 | 7.8 | 7.9 |
| BL @1550 nm (dB/turn) | Rc=15 mm | $6.3 \times 10^{-4}$ | $8.1 \times 10^{-4}$ | $1.1 \times 10^{-3}$ |
| | Rc=10 mm | $1.0 \times 10^{-2}$ | $1.5 \times 10^{-2}$ | $2.1 \times 10^{-2}$ |
| | Rc=7.5 mm | $4.2 \times 10^{-2}$ | $6.2 \times 10^{-2}$ | $6.8 \times 10^{-2}$ |
| | Rc=5 mm | $2.3 \times 10^{-1}$ | $3.3 \times 10^{-1}$ | $2.4 \times 10^{-1}$ |
| BL @1625 nm (dB/turn) | Rc=15 mm | $3.2 \times 10^{-3}$ | $3.4 \times 10^{-3}$ | $5.0 \times 10^{-3}$ |
| | Rc=10 mm | $2.3 \times 10^{-2}$ | $3.3 \times 10^{-2}$ | $4.2 \times 10^{-2}$ |
| | Rc=7.5 mm | $7.9 \times 10^{-2}$ | $1.0 \times 10^{-1}$ | $1.2 \times 10^{-1}$ |
| | Rc=5 mm | $3.1 \times 10^{-1}$ | $4.6 \times 10^{-1}$ | $3.8 \times 10^{-1}$ |

The examples of Table IV differ by the number of holes made in the optical cladding, comprised between 5 and 8, and by their radius comprised between 4 and 8 $\mu$m.

Fibres B, M, N have a fibre mode field diameter at 1310 nm comprised between 8.8 and 9 $\mu$m. These values comply with the G.652 standard.

Fibres B, M and N also have a fibre cut-off wavelength ensuring a cable cut-off wavelength complying with the G.652 standard. Moreover, fibres B, M and N have bending losses complying with the G.657B standard.

In particular, fibre M has bending losses ten times less than the corresponding limit values of the standard for the wavelength of 1550 nm and radii of curvature of 7.5 and 10 mm.

Moreover, fibres B, M and N have bending losses approximately ten times less than the values set by the G.657B standard at the wavelength of 1625 nm and radii of curvature of 7.5 and 15 mm. It should be noted that Example M does not form part of the invention.

The optical fibres according to the invention are suitable for use in optical systems laid to the home of the subscriber, of the FTTH type or FTTC type, in which the optical fibre is subjected to significant bending stresses due to the miniaturisation of the optical boxes or attachment by clips. The optical fibre according to the invention can in particular be placed in particularly compact optical boxes, the optical fibre being arranged with a radius of curvature less than 15 mm, for example a radius of curvature of the order of 5 mm.

Preferably, the optical fibre according to the invention remains compatible with the optical fibres of existing systems, in particular as regards the mode field diameter, for effective fibre-to-fibre splicing.

**Claims**

1. An optical fibre (10), comprising, from the centre to the periphery, a central core (12) and an optical cladding (14), wherein

   - the central core (12) has a index $n_1$ and a radius $r_1$ such that

$$3.2 \ \mu m < r_1 < 4.5 \ \mu m \ ;$$

   - the optical cladding has an index $n_2$ such that $n_2 < n_1$ and

$$0.31\% < \Delta n = \frac{n_1 - n_2}{n_2} < 0.55\% \ ;$$

   the optical cladding (14) comprising a single ring of at least five holes (16) of radius $r_h$ distributed at a distance $\Lambda$ from the central core, the distance $\Lambda$ being measured from the centre of the central core (12) to the centre of the holes (16), **characterized in that**

$$9 \ \mu m < \Lambda \leq 17 \ \mu m \ \text{ and } 0.5 \ x \ r_1 \leq r_h \leq 0.9 \ x \ r_1.$$

2. The optical fibre according to claim 1, wherein the at least five holes (16) are circumferentially equidistantly distributed.

3. The optical fibre according to claim 1 or 2, having a MAC value of at least 6.5, the MAC value being defined as the ratio of the mode field diameter (MDF) of the optical fibre at 1550 nm to the effective cut-off wavelength of the fibre.

4. The optical fibre according to claims 1 to 3, having bending losses at a wavelength of 1550 nm of less than:

   - $5.0 \times 10^{-1}$ dB/turn for a radius of curvature Rc=7.5 mm; and
   - $1.0 \cdot 10^{-1}$ dB/turn for a radius of curvature Rc=10 mm;
   - the optical fibre having a MAC value less than 8.5, the MAC value being defined as the ratio of the mode field diameter (MDF) of the optical fibre at 1550 nm to the effective cut-off wavelength of the fibre.

5. The optical fibre according to one of the claims 1 to 4, having bending losses at a wavelength of 1625 nm of less than:

   - 1.0 dB/turn for a radius of curvature Rc=7.5 mm; and
   - 0.2 dB/turn for a radius of curvature Rc=10 mm;
   - the optical fibre having a MAC value less than 8.5, the MAC value being defined as the ratio of the mode field diameter (MDF) of the optical fibre at 1550 nm to the effective cut-off wavelength of the fibre.

6. The optical fibre according to claim 4 or 5, having a MAC value less than 8.4 and, at a wavelength of 1550 nm, bending losses of less than:

   - $6.0 \cdot 10^{-1}$ dB/turn for a radius of curvature Rc=5 mm, and
   - $8.0 \cdot 10^{-3}$ dB/turn for a radius of curvature Rc=15 mm, and preferably having a MAC value less than 8 and, at a wavelength of 1550 nm, bending losses of less than:
   - $3.0 \cdot 10^{-1}$ dB/turn for a radius of curvature Rc=5 mm, and
   - $4.0 \cdot 10^{-3}$ dB/turn for a radius of curvature Rc=15 mm,

7. The optical fibre according to claim 6, having a MAC value less than 7.5 and, at a wavelength of 1550 nm, bending losses of less than:

  - $2.0 \cdot 10^{-1}$ dB/turn for a radius of curvature Rc=5 mm, and
  - $7.0 \cdot 10^{-4}$ dB/turn for a radius of curvature Rc=15 mm, and preferably having a MAC value less than 7 and, at a wavelength of 1550 nm, bending losses of less than:
  - $1.0 \cdot 10^{-1}$ dB/turn for a radius of curvature Rc=5 mm, and
  - $1.0 \cdot 10^{-5}$ dB/turn for a radius of curvature Rc=15 mm.

8. The optical fibre according to any one of the previous claims, having a zero dispersion wavelength $\lambda_0$ comprised between 1300 *nm* < $\lambda_0$ < 1324 *nm*.

9. The optical fibre according to any one of the previous claims, having a chromatic dispersion slope at the zero dispersion wavelength of less than $9.2.10^{-2}$ ps/nm$^2$/km.

10. The optical fibre according to any one of the previous claims, having a cable cut-off wavelength of less than 1260 nm.

11. The optical fibre according to any one of the previous claims having a mode field diameter $2 \times$W02 at the wavelength of 1310 nm comprised between 8.6 and 9.5 $\mu$m.

12. The optical fibre according to any one of the previous claims, wherein $r_h$ is equal to or greater than 0.6 x $r_1$, preferably equal to or greater than 0.7 x $r_1$.

**Patentansprüche**

1. Optische Faser (10), die, von der Mitte zum Umfang gesehen, einen mittigen Kern (12) und einen optischen Mantel (14) umfasst, wobei

  - der mittige Kern (12) einen Index $n_1$ und einen Radius $r_1$ hat, sodass

$$3,2\,\mu m \;<\; r_1 \;<\; 4,5\,\mu m \;;$$

  - der optische Mantel einen Index $n_2$ hat, sodass $n_2 < n_1$ und

$$0,31\,\% \;<\; \Delta n \;=\; \frac{n_1 - n_2}{n_2} < 0,55\% \;;$$

wobei der optische Mantel (14) einen einzelnen Ring aus mindestens fünf Löchern (16) mit Radius $r_h$ umfasst, wobei die Löcher in einem Abstand $\Lambda$ vom mittigen Kern verteilt angeordnet sind und der Abstand $\Lambda$ von der Mitte des mittigen Kerns (12) zur Mitte der Löcher (16) gemessen wird, **dadurch gekennzeichnet, dass**

$$9\,\mu m < \Lambda < 17\,\mu m \;\text{und}\; 0,5 \;\times\; r_1 \;\leq\; r_h \;\leq\; 0,9 \times r_1 .$$

2. Optische Faser nach Anspruch 1, wobei die wenigstens fünf Löcher (16) in Umfangsrichtung äquidistant verteilt sind.

3. Optische Faser nach Anspruch 1 oder 2 mit einem MAC-Wert von wenigstens 6,5, wobei der MAC-Wert als das Verhältnis des Modenfelddurchmessers (MDF) der optischen Faser bei 1550 nm zur effektiven Grenzwellenlänge der Faser definiert ist.

4. Optische Faser nach einem der Ansprüche 1 bis 3 mit Krümmungsverlusten bei einer Wellenlänge von 1550 nm von weniger als:

  - $5,0 \cdot 10^{-1}$ dB/Windung bei einem Krümmungsradius Rc = 7,5 mm; und
  - $1,0 \cdot 10^{-1}$ dB/Windung bei einem Krümmungsradius Rc = 10 mm;

- wobei die optische Faser einen MAC-Wert von weniger als 8,5 hat, wobei der MAC-Wert als das Verhältnis des Modenfelddurchmessers (MDF) der optischen Faser bei 1550 nm zur effektiven Grenzwellenlänge der Faser definiert ist.

**5.** Optische Faser nach einem der Ansprüche 1 bis 4 mit Krümmungsverlusten bei einer Wellenlänge von 1625 nm von weniger als:

- 1,0 dB/Windung bei einem Krümmungsradius Rc = 7,5mm; und
- 0,2 dB/Windung bei einem Krümmungsradius Rc = 10 mm;
- wobei die optische Faser einen MAC-Wert von weniger als 8,5 hat, wobei der MAC-Wert als das Verhältnis des Modenfelddurchmessers (MDF) der optischen Faser bei 1550 nm zur effektiven Grenzwellenlänge der Faser definiert ist.

**6.** Optische Faser nach Anspruch 4 oder 5 mit einem MAC-Wert von weniger als 8,4 und Krümmungsverlusten bei einer Wellenlänge von 1550 nm von weniger als:

- $6,0\cdot10^{-1}$ dB/Windung bei einem Krümmungsradius Rc = 5mm und
- $8,0\cdot10^{-3}$ dB/Windung bei einem Krümmungsradius Rc = 15 mm und vorzugsweise mit einem MAC-Wert von weniger als 8 und Krümmungsverlusten bei einer Wellenlänge von 1550 nm von weniger als:
- $3,0\cdot10^{-1}$ dB/Windung bei einem Krümmungsradius Rc = 5 mm und
- $4,0\cdot10^{-3}$ dB/Windung bei einem Krümmungsradius Rc = 15 mm.

**7.** Optische Faser nach Anspruch 6 mit einem MAC-Wert von weniger als 7,5 und Krümmungsverlusten bei einer Wellenlänge von 1550 nm von weniger als:

- $2,0\cdot10^{-1}$ dB/Windung bei einem Krümmungsradius Rc = 5mm und
- $7,0\cdot10^{-4}$ dB/Windung bei einem Krümmungsradius Rc = 15 mm und vorzugsweise mit einem MAC-Wert von weniger als 7 und Krümmungsverlusten bei einer Wellenlänge von 1550 nm von weniger als:
- $1,0\cdot10^{-1}$ dB/Windung bei einem Krümmungsradius Rc = 5 mm und
- $1,0\cdot10^{-5}$ dB/Windung bei einem Krümmungsradius Rc = 15 mm.

**8.** Optische Faser nach einem der vorhergehenden Ansprüche mit einer Nulldispersions-Wellenlänge $\lambda_0$ von 1300 nm < $\lambda_0$ < 1324 nm.

**9.** Optische Faser nach einem der vorhergehenden Ansprüche, mit einer chromatischen Dispersionssteilheit bei der Nulldispersions-Wellenlänge von weniger als $9,2\cdot10^{-2}$ ps/nm$^2$/km.

**10.** Optische Faser nach einem der vorhergehenden Ansprüche, mit einer Kabel-Grenzwellenlänge von weniger als 1260 nm.

**11.** Optische Faser nach einem der vorhergehenden Ansprüche, mit einem Modenfelddurchmesser 2×W02 zwischen 8,6 und 9,5 $\mu$m bei der Wellenlänge von 1310 nm.

**12.** Optische Faser nach einem der vorhergehenden Ansprüche, wobei $r_h$ gleich oder größer als $0,6 \times r_1$, vorzugsweise gleich oder größer als $0,7 \times r_1$ ist.

**Revendications**

**1.** Fibre optique (10), comprenant, depuis le centre vers la périphérie, un coeur central (12) et une gaine optique (14), dans laquelle

- le coeur central (12) présente un indice $n_1$ et un rayon $r_1$ tel que

$$3,2 \ \mu m \ < \ r_1 \ < \ 4,5 \ \mu m \ ;$$

- la gaine optique présente un indice $n_2$ tel que $n_2 < n_1$ et

$$0,31 \% < \Delta n = \frac{n_1 - n_2}{n_2} < 0,55 \% \; ;$$

la gaine optique (14) comprenant une couronne unique d'au moins cinq trous (16) de rayon $r_h$ répartis à une distance $\Lambda$ du coeur central, la distance $\Lambda$ étant mesurée du centre du coeur central (12) au centre des trous (16), **caractérisée en ce que**

$$9 \ \mu m < \Lambda \leq 17 \ \mu m \ et \ 0,5 \ x \ r_1 \leq r_h \leq 0,9 \ x \ r_1.$$

**2.** Fibre optique selon la revendication 1, dans laquelle les au moins cinq trous (16) sont équirépartis circonférentiellement.

**3.** Fibre optique selon la revendication 1 ou 2, présentant une valeur MAC supérieure à 6,5, la valeur MAC étant définie comme le rapport du diamètre de champ modal (MDF) de la fibre optique à 1550 nm sur la longueur d'onde de coupure effective de la fibre.

**4.** Fibre optique selon les revendications 1 à 3, présentant, pour une longueur d'onde de 1550 nm, des pertes par courbure inférieures :

- à $5,0 \cdot 10^{-1}$ dB/tour pour un rayon de courbure Rc=7,5 mm ; et
- à $1,0 \cdot 10^{-1}$ dB/tour pour un rayon de courbure Rc=10 mm ;
- la fibre optique présentant une valeur MAC inférieure à 8,5, la valeur MAC étant définie comme le rapport du diamètre de champ modal (MDF) de la fibre à 1550 nm sur la longueur d'onde de coupure effective de la fibre.

**5.** Fibre optique selon l'un des revendications 1 à 4, présentant, pour une longueur d'onde de 1625 nm, des pertes par courbure inférieures :

- à 1,0 dB/tour pour un rayon de courbure Rc=7,5 mm ; et
- à 0,2 dB/tour pour un rayon de courbure Rc=10 mm ;
- la fibre optique présentant une valeur MAC inférieure à 8,5, la valeur MAC étant définie comme le rapport du diamètre de champ modal (MDF) de la fibre à 1550 nm sur la longueur d'onde de coupure effective de la fibre.

**6.** Fibre optique selon la revendication 4 ou 5, présentant une valeur de MAC inférieure à 8,4 et, pour une longueur d'onde de 1550 nm, des pertes par courbure inférieures :

- à $6,0 \cdot 10^{-1}$ dB/tour pour un rayon de courbure Rc=5 mm, et
- à $8,0 \cdot 10^{-3}$ dB/tour pour un rayon de courbure Rc=15 mm, et de préférence présentant une valeur de MAC inférieure à 8 et, pour une longueur d'onde de 1550 nm, des pertes par courbure inférieure :
- à $3,0 \cdot 10^{-1}$ dB/tour pour un rayon de courbure Rc=5 mm, et
- à $4,0 \cdot 10^{-3}$ dB/tour pour un rayon de courbure Rc=15 mm.

**7.** Fibre optique selon la revendication 6, présentant une valeur de MAC inférieure à 7,5 et, pour une longueur d'onde de 1550 nm, des pertes par courbure inférieure :

- à $2,0 \cdot 10^{-1}$ dB/tour pour un rayon de courbure Rc=5 mm, et
- à $7,0 \cdot 10^{-4}$ dB/tour pour un rayon de courbure Rc=15 mm, et de préférence présentant une valeur de MAC inférieure à 7 et, pour une longueur d'onde de 1550 nm, des pertes par courbure inférieure :
- à $1,0 \cdot 10^{-1}$ dB/tour pour un rayon de courbure Rc=5 mm, et
- à $1,0 \cdot 10^{-5}$ dB/tour pour un rayon de courbure Rc=15 mm.

**8.** Fibre optique selon l'une quelconque des revendications précédentes, présentant une valeur de sa longueur d'onde d'annulation de la dispersion $\lambda_0$ comprise entre 1300 nm $< \lambda_0 <$ 1324 nm.

**9.** Fibre optique selon l'une quelconque des revendications précédentes, présentant une valeur de sa pente de dispersion chromatique à sa longueur d'onde d'annulation de la dispersion inférieure à 9,2.10$^{-2}$ ps/nm$^2$/km.

10. Fibre optique selon l'une quelconque des revendications précédentes, présentant une longueur d'onde de coupure en câble inférieure à 1260 nm.

11. Fibre optique selon l'une quelconque des revendications précédentes, présentant un diamètre de champ modal 2×W02 à la longueur d'onde de 1310 nm compris entre 8,6 et 9,5 $\mu$m.

12. Fibre optique selon l'une quelconque des revendications précédentes, dans laquelle $r_h$ est supérieur ou égal à 0,6 x $r_1$, de préférence supérieur ou égal à 0,7 x $r_1$.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1845399 A
- EP 1785754 A
- US 7164835 A
- US 20070147756 A
- US 6901197 B
- US 200624009 A
- US 6636677 B
- US 5907652 A
- US 200645448 A

### Non-patent literature cited in the description

- Hole-assisted fiber design for small bending and splice losses. *IEEE photonics technology letters,* December 2003, vol. 15 (12
- High performance optical fibers for next generation transmission systems. *Hitachi Cable Review,* August 2003
- **Y. KATO ; K. SUZUKI ; K. OHSONO.** Field installable connector optimized for holey fiber. *Optical fiber communications conference, OFC,* 2007
- **G.H. KIM ; Y.-G. HAN ; H.S. CHO ; S.H. KIM ; S.B. LEE ; K.S. LEE ; C.H. JEONG ; C.H. OH ; H.J. KANG.** A novel fabrication method of versatile holey fibers with low bending loss and their optical characteristics. *the proceedings of the Optical fiber communications conference,* 2006